# EUROPEAN PATENT APPLICATION

(11) **EP 4 397 952 A1**
(43) Date of publication of application: **10.07.2024**
(21) Application number: 22864039.7
(22) Date of filing: 30.06.2022
(51) Int. Cl.: G01M 17/02

(54) **VEHICLE ENERGY CONSUMPTION PREDICTING SYSTEM, VEHICLE ENERGY CONSUMPTION PREDICTING PROGRAM, AND PREDICTING METHOD**

(30) Priority: 02.09.2021 JP 2021143404
(71) Applicant: BRIDGESTONE CORPORATION, Chuo-ku Tokyo 104-8340 (JP)
(72) Inventor: NOBUNAGA Yusuke, Chuo-ku, Tokyo 104-8340 (JP)
(74) Representative: Marks & Clerk LLP
(86) International application number: PCT/JP2022/026200
(87) International publication number: WO 2023/032451

(57) **Abstract**

The system includes a travel condition acquiring unit 102 for acquiring travel conditions including information on the number of travels of a predetermined route R traveled by the vehicle V and the wear state of tires mounted on the vehicle, a road surface civility acquisition unit 103 for acquiring the road surface civility RS1 corresponding to the energy consumption per travel distance of the vehicle for each route, and an energy consumption predicting unit 105 for predicting the energy consumption of the vehicle based on the travel conditions and the road surface civility. Thus, the energy consumption of the vehicle for each route can be predicted.

## Description

### [Technical Field]

The present invention relates to an energy consumption prediction system, an energy consumption prediction program for the vehicle, and an energy consumption prediction method for the vehicle for predicting energy consumption of a bus and a freight vehicle, etc.

### [Background Art]

It is important for a business operator who operates a vehicle to grasp the wear life of a tire attached to a bus, a freight vehicle, etc., and there has been a desire to obtain prediction information on the wear life of the tire.

Therefore, various techniques for obtaining prediction information on the wear life of the tire have been proposed (Patent Literature 1).

Patent Literature 1 discloses a technique for predicting the wear life when the tire is rolled under a predetermined rolling condition.

In particular, the above conventional technique shows a method for predicting tire wear life by reflecting severity information (amount of tire friction energy per unit time) that changes depending on the difference in driving conditions such as vehicle type, tire mounting position, and driving course.

As a result, it is possible to manage the wear life of each tire by grasping the appropriate timing for tire replacement work, and to efficiently perform tire replacement work so that the safety of vehicles such as buses, can be secured and tire failure can be prevented.

### [Citation List]

### [Patent Literature]

[Patent Literature 1]
Japanese Patent Application Laid-Open No. 2008-82914

### [Summary of Invention]

On the other hand, there is a request to predict the energy consumption (including so-called fuel economy) of bus and freight vehicles operated on route buses or expressway buses in addition to predicting the wear life of tires.

In other words, it is very important for bus companies and other companies that operate vehicles to obtain predictive information on how much energy consumption (For example, fuel consumption of vehicles equipped with internal combustion engines, CO2 emissions, electric power consumption of electric vehicles, etc.) will be per route.

However, in the above conventional technology, the tire wear life is only predicted by reflecting the severity information that changes according to the driving condition, and it is not possible to predict the energy consumption per route.

Therefore, the present invention is made in view of the above problem, and it is an object of the present invention to provide a vehicle energy consumption prediction system, a vehicle energy consumption prediction program, and a prediction method capable of predicting the energy consumption per route.

### [Means for Solving the Problem]

An energy consumption prediction system for a vehicle according to an aspect of the present invention includes a travel condition acquisition unit that acquires a travel condition including information on a number of travels of a predetermined route traveled by a vehicle and a wear condition of a tire mounted on the vehicle, a road surface civility acquisition unit that acquires road surface civility corresponding to energy consumption per travel distance of the vehicle for each of the routes, and an energy consumption prediction unit that predicts the energy consumption of the vehicle based on the travel conditions and the road surface civility.

Thus, it is possible to predict the energy consumption of each route for the vehicle.

In addition, a road surface civility correction unit is provided for correcting the road surface civility, and the road surface civility correction unit can correct the road surface civility by using a road surface civility that differs depending on the wear state of the tire.

Thus, it is possible to predict the energy consumption of a vehicle for each route with higher accuracy.

In addition, the road surface civility correction unit may correct the road surface civility that differs depending on a type of the tire input via the predetermined input means.

Thus, the energy consumption of a vehicle for each route can be predicted more accurately according to the type of tire.

Further, the travel condition can include information on a plurality of wear states of the tire.

Thus, the energy consumption of each route of the vehicle can be predicted more accurately according to the wear state of the tire.

In addition, the traveling condition acquisition unit may set the difference in the number of travels of each route within a predetermined range.

Thus, the traveling frequency of each route can be predicted to be equal in accordance with the actual traveling.

Further, the road surface civility acquiring unit further acquires the road surface civility with respect to the durability performance of the tire for each route or the road surface civility with respect to a degree of influence on the tire durability for each route, and the energy consumption prediction system is provided with a tire durability performance determination unit that determines whether the durability performance or the degree of influence falls within a predetermined threshold under the travel condition.

Thus, the energy consumption of the vehicle for each of the routes can be predicted, and the durability performance of the tire can be determined.

A energy consumption prediction program for vehicle according to another aspect of the present invention causes an energy consumption prediction system to execute a travel condition acquisition step for acquiring a travel condition including information on a number of travels of a predetermined route traveled by a vehicle and a wear condition of a tire mounted on the vehicle, a road surface civility acquisition step for acquiring road surface civility corresponding to energy consumption per travel distance of the vehicle for each of the routes, and an energy consumption prediction step for predicting the energy consumption of the vehicle based on the travel conditions and the road surface civility.

Thus, it is possible to predict the energy consumption of each route for the vehicle.

An energy consumption prediction method for vehicle according to another aspect of the present invention includes a travel condition acquisition process for acquiring a travel condition including information on a number of travels of a predetermined route traveled by a vehicle and a wear condition of a tire mounted on the vehicle, a road surface civility acquisition process for acquiring road surface civility corresponding to energy consumption per travel distance of the vehicle for each of the routes, and an energy consumption prediction process for predicting the energy consumption of the vehicle based on the travel conditions and the road surface civility.

Thus, it is possible to predict the energy consumption of each route for the vehicle.

According to the present invention, it is possible to provide a vehicle energy consumption prediction system, a vehicle energy consumption prediction program, and a prediction method capable of predicting the energy consumption of each vehicle for each route.

### [Brief Description of Drawings]

[FIG. 1] FIG. 1 is a functional block diagram showing the functional configuration of the vehicle energy consumption prediction system according to the embodiment.
[FIG. 2] FIG. 2 is a flowchart showing an example of the processing procedure of the vehicle energy consumption prediction process executed by the vehicle energy consumption prediction system according to the embodiment.
[FIG. 3] FIG. 3A is an explanatory diagram schematically showing changes in performance due to differences in tire wear conditions, and FIG. 3B is a diagram showing the relationship between tire wear conditions and energy consumption, durability, and wear.
[FIG. 4] FIGS. 4A, 4B and 4C are explanatory diagrams showing the relationship between routes and energy consumption, durability, and wear.

### [Modes for Carrying out the Invention]

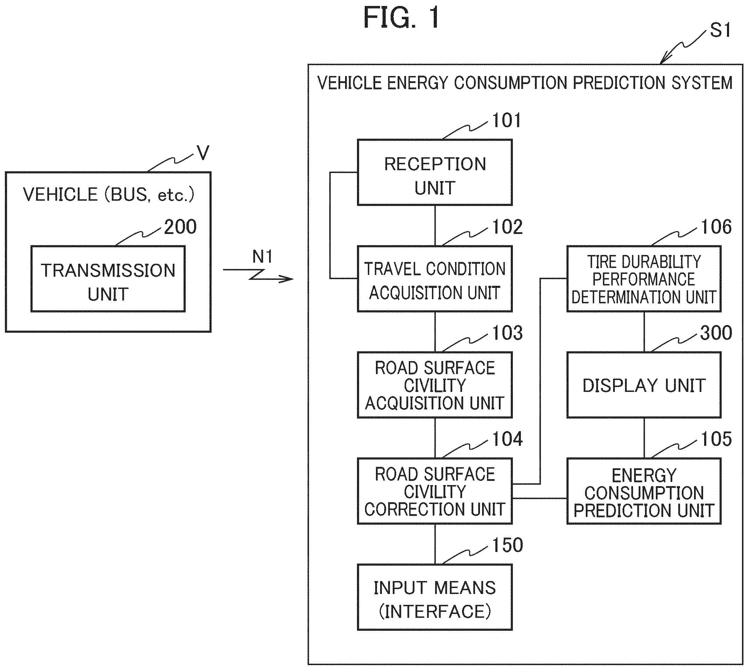

Referring to FIGS. 1 to 4, an energy consumption prediction system S1 of a vehicle according to an embodiment of the present invention will be described.

In the following drawings, the same or similar parts are denoted by the same or similar reference numerals. However, it should be noted that the drawings are schematic, and the proportions of each dimension are different from the actual ones.

Therefore, the specific dimensions should be judged by considering the following explanation. Moreover, it should be noted that the drawings include portions in which the relationship and ratio of the dimensions of each other are different.

### (Schematic structure of vehicle energy consumption prediction system)

Referring to the functional block diagram of FIG. 1, a schematic structure of the vehicle energy consumption prediction system S1 according to the embodiment will be described.

The vehicle energy consumption prediction system S 1 is configured by, for example, a general-purpose computer, a server, and the like, and as shown in FIG. 1, is configured to receive various data from a transmission unit 200 provided in a vehicle V such as a bus.

As shown in FIG. 1, the vehicle energy consumption prediction system (hereinafter referred to as the energy consumption prediction system for short) S1 includes a reception unit 101 that receives various data, such as the number of travels on a predetermined route and information on the wear state of tires mounted on the vehicle V, from the transmission unit 200 provided in a vehicle V such as a bus via a radio line N.

The vehicle V may be a vehicle equipped with an internal combustion engine such as a gasoline engine, a diesel engine, a hydrogen engine, or an electric vehicle.

The energy consumption prediction system S1 includes a travel condition acquisition unit 102 for acquiring a travel condition DC 1 including information TW1 on a predetermined route R (number of travels of R1, R2, etc., and wear condition of tires mounted on the vehicle V) on which the vehicle V such as a bus travels.

The energy consumption prediction system S1 includes a road surface civility acquisition unit 103 for acquiring a road surface civility RS1 corresponding to the energy consumption per traveling distance of the vehicle V for each route R1, R2, etc.

It should be noted that the energy consumption per traveling distance of the vehicle V can be acquired from the measured value obtained by traveling the vehicle V on each route R1, R2, etc.

In addition, the energy consumption prediction system S 1 includes a road surface civility correction unit 104 for correcting the road surface civility RS1, which varies depending on the wear state of the tire.

The energy consumption prediction system S1 includes an energy consumption prediction unit 105 for predicting the energy consumption of the vehicle V based on the travel conditions DC 1 and the road surface civility RS1.

The road surface civility acquisition unit 103 further acquires the road surface civility DUla concerning the durability performance of the tire for each route R1, R2, etc., or the road surface civility DUlb concerning the degree of influence on the tire endurance for each route R1, R2, etc., and the energy consumption prediction system S 1 includes a tire durability performance determination unit 106 for determining whether the durability performance or the degree of influence falls within a predetermined threshold under the travel conditions DC 1.

The energy consumption prediction system S1 also includes a display unit 300 composed of a liquid crystal display device or the like for displaying information on the energy consumption predicted by the energy consumption prediction unit 105, a determination result by the tire durability performance determination unit 106, and the like.

With such a configuration, the energy consumption of each route or the like can be predicted for the vehicle V, and the convenience of a bus company or the like that operates a bus or the like can be improved.

In addition, the road surface civility correction unit 104 can correct the road surface civility RS1 according to the type of tire.

The type of tire can be inputted through an input means (interface) 150 composed of a keyboard, a touch panel, etc.

Thus, the energy consumption can be predicted with higher accuracy according to the type of tire mounted on a vehicle V such as a bus.

The driving condition DC1 may also include information on a plurality of wear states of the tire (For example, the initial stage of wear, the middle stage of wear, and the end stage of wear according to the measured value of the groove of the tire).

Thus, the energy consumption of each of the routes R1 and R2 for the vehicle V can be predicted with higher accuracy according to the wear state of the tire.

Furthermore, the travel condition acquisition unit 102 can set the difference in the number of travels of each of the routes R1, R2, etc. within a predetermined range. That is, when the route R1 is a route that travels in an urban area and the route R2 is a route that travels on an expressway, the travel frequency of each of the routes can be set to the same level to predict the energy consumption.

Various information such as the travel condition DC1 and the road surface civility RS1 may be automatically acquired from the vehicle V, or may be appropriately inputted from the input means (interface) 150 such as a keyboard.

### (Prediction of Energy Consumption of Vehicles)

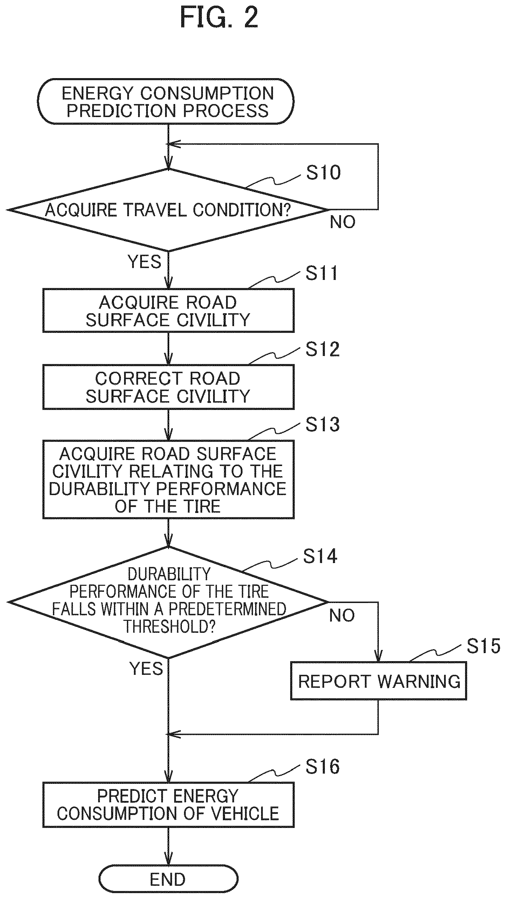

Referring to the flowchart of FIG. 2, an example of the processing procedure for the prediction of energy consumption of vehicles executed by the vehicle energy consumption prediction system S 1 will be described.

When this processing is started, it is first determined in step S10 whether or not the travel condition DC1 including information TW1 on a predetermined route R (number of travels of R1, R2, etc.) and wear status of tires mounted on the vehicle V has been acquired.

In acquiring the travel condition, the difference in the travel frequency of each route R can be set within a predetermined range.

When the determination result is "No ", the process waits, and when it is" Yes", the process proceeds to step S11.

In step S11, the road surface civility RS1 corresponding to the energy consumption per traveling distance (mileage) of the vehicle V is acquired, and the process proceeds to step S12.

In step S12, the road surface civility RS1 is corrected on the basis of the tire wear state information (For example, the initial stage of wear, the middle stage of wear, the end stage of wear, etc. according to the measured value of the groove of the tire, etc.). At this time, the road surface civility RS1 can be corrected according to the type of tire.

Next, in step S13, the road surface civility DU1 relating to the durability performance of the tire for each route R1, R2, etc. is acquired, and the process proceeds to step S14.

In step S14, it is determined whether or not the durability performance of the tire falls within a predetermined threshold.

When the determination result is "No ", the process proceeds to step S15, and the process proceeds to step S16 after warning is reported.

The warning can be reported by displaying a message such as "The life end of the tire is approaching. Change the tire as soon as possible." on the display unit 300.

If the determination result is "Yes ", the process proceeds to step S16.

In step S16, the process ends by predicting the energy consumption of the vehicle V.

By such a process, it is possible to predict the energy consumption of the vehicle V for each route and to determine the durability performance of the tire.

### (Effect of combination of tire wear condition and route)

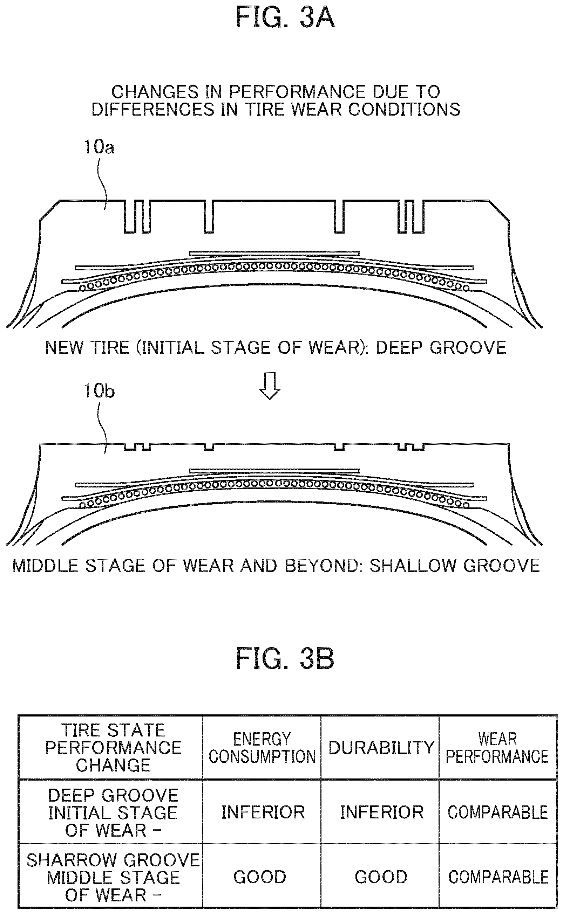

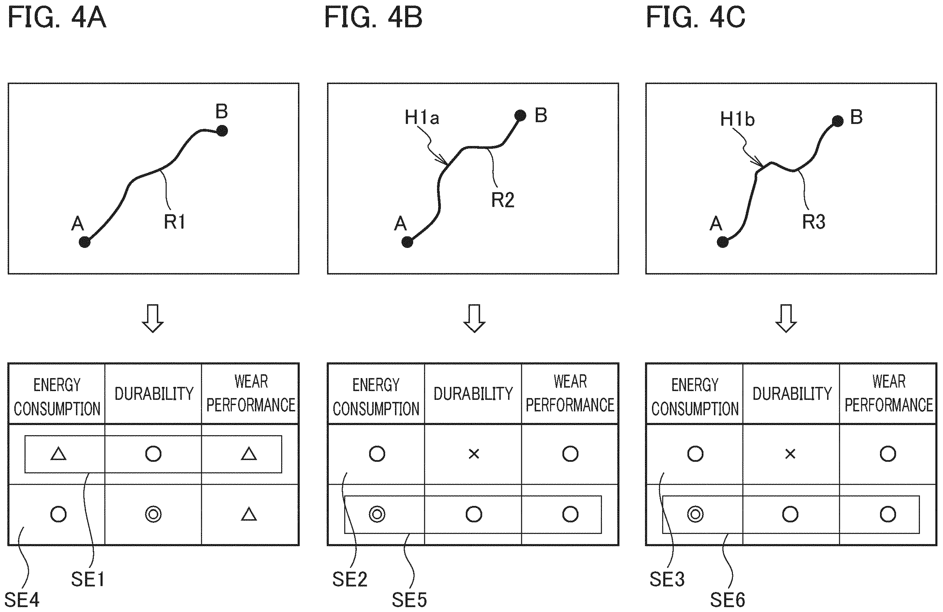

The effect of combination of tire wear condition and route will be described with reference to FIGS. 3A and 3B and 4.

Referring to FIG. 3A, an explanatory diagram schematically showing the performance change due to the difference in the wear state of the tire, and referring to FIG. 3B a diagram showing the relationship between the wear state of the tire and energy consumption, durability, and wear are illustrated.

On the upper side of FIG. 3A, a new tire 10a (in the initial stage of wear) with a deep groove is shown.

On the lower side of FIG. 3A, a tire 10b with a shallow groove after the middle stage of wear is shown.

A diagram of FIG. 3B shows the relationship between the tire state performance change and energy consumption, durability, and wear performance.

In the example shown here, in the deep groove (from the initial stage of wear), the energy consumption is "inferior," the durability is "inferior," and the wear performance is "comparable"; in the shallow groove (from the middle stage of wear), the energy consumption is "good," the durability is "good," and the wear performance is "comparable."

FIGS. 4A, 4B and 4C are explanatory diagrams showing the relationship between the route and energy consumption, durability, and wear performance.

In the examples shown in FIGS. 4A and 4B, the route R1 to R3 from point A to point B is assumed as a virtual operation.

The route R1 is assumed to operate only on urban routes, the route R2 is assumed to operate partly on highway H1a, and the route R3 is assumed to operate about half on highway H1b.

The operation services SE1, SE2, and SE3 use vehicles (buses, etc.) V equipped with new to half-worn tires, and the operation services SE4, SE5, and SE6 use vehicles (buses, etc.) equipped with half-worn to fully worn tires to perform virtual operations (For example, about 8 times) for each route R1 to R3.

Based on the data acquired by such virtual operations, the energy consumption prediction process described above is executed, and the energy consumption of vehicle V is predicted.

As a result, the prediction results of energy consumption, durability, and wear were obtained as shown in the lower rows of FIGS. 4A and 4B. Here, "⊚" represents best, "o" represents good, "△" represents normal, and "×" represents inferior.

From this prediction result, it is possible to maximize the effect of energy consumption by, for example, using the deep groove tire 10a on the urban route (route R1) (equivalent to operation service SE 1) to preserve durability, and using the shallow groove tire 10b on routes R2 and R3 using the highways H1a and H1b (Corresponds to SE2 and SE3 service).

Although the energy consumption prediction system, tire state quantity estimation program, and tire state quantity estimation method of the present invention have been described based on the illustrated embodiment, the present invention is not limited thereto, and the configuration of each part can be replaced with any configuration having similar functions.

The wear state described above may be predicted to change at a certain rate or may be phased (Two stages of the initial and middle, etc.).

The energy consumption can be predicted based on the actually measured value of the energy consumption to predict the energy consumption of the set route.

In addition, the wear state of several tires can be calculated as the same, but in the case of different tires, it may be calculated by averaging.

In addition, it may be calculated by taking into account the performance effect caused by the change in the internal pressure of the tires.

### [Explanation of Reference Numerals]

V Vehicle
S1 Vehicle energy consumption prediction system
101 Reception unit
102 Travel condition acquisition unit
103 Road surface civility acquisition unit
104 Road surface civility correction unit
105 Energy consumption prediction unit
106 Tire durability performance determination unit
150 Input means (interface)
300 Display unit

## Claims

1. An energy consumption prediction system for vehicle, comprising:
a travel condition acquisition unit that acquires a travel condition including information on a number of travels of a predetermined route traveled by a vehicle and a wear condition of a tire mounted on the vehicle;
a road surface civility acquisition unit that acquires road surface civility corresponding to energy consumption per travel distance of the vehicle for each of the routes; and
an energy consumption prediction unit that predicts the energy consumption of the vehicle based on the travel conditions and the road surface civility.

2. The energy consumption prediction system for vehicle according to claim 1, comprising a road surface civility correction unit that corrects the road surface civility, wherein
the road surface civility correction unit corrects the road surface civility by using a road surface civility that differs depending on the wear state of the tire.

3. The energy consumption prediction system for vehicle according to claim 2, wherein the road surface civility correction unit corrects the road surface civility different depending on a type of the tire input via a predetermined input means.

4. The energy consumption prediction system for vehicle according to any one of claims 1 to 3, wherein the travel condition includes information on a plurality of wear states of the tire.

5. The energy consumption prediction system for vehicle according to any one of claims 1 to 4, wherein the travel condition acquisition unit sets a difference in the number of travels of each route within a predetermined range.

6. The energy consumption prediction system for vehicle according to any one of claims 1 to 5, wherein the road surface civility acquisition unit further acquires the road surface civility with respect to the durability performance of the tire for each route or the road surface civility with respect to a degree of influence on the tire durability for each route, and
wherein the energy consumption prediction system further comprises a tire durability performance determination unit that determines whether the durability performance or the degree of influence falls within a predetermined threshold under the travel condition.

7. An energy consumption prediction program for vehicle causes an energy consumption prediction system to execute:
a travel condition acquisition step for acquiring a travel condition including information on a number of travels of a predetermined route traveled by a vehicle and a wear condition of a tire mounted on the vehicle;
a road surface civility acquisition step for acquiring road surface civility corresponding to energy consumption per travel distance of the vehicle for each of the routes; and
an energy consumption prediction step for predicting the energy consumption of the vehicle based on the travel conditions and the road surface civility.

8. An energy consumption prediction method for vehicle comprising:
a travel condition acquisition process for acquiring a travel condition including information on a number of travels of a predetermined route traveled by a vehicle and a wear condition of a tire mounted on the vehicle;
a road surface civility acquisition process for acquiring road surface civility corresponding to energy consumption per travel distance of the vehicle for each of the routes; and
an energy consumption prediction process for predicting the energy consumption of the vehicle based on the travel conditions and the road surface civility.
